Europäisches Patentamt

**European Patent Office**

Office européen des brevets

(19)

(11) Publication number: **0 012 462**
**B1**

(12) # EUROPEAN PATENT SPECIFICATION

(45) Date of publication of patent specification: **22.06.83**    (51) Int. Cl.³: **E 06 B 3/66**

(21) Application number: **79200699.1**

(22) Date of filing: **29.11.79**

(54) Apparatus for automatically producing glazed insulating window or door panels.

(30) Priority: **18.12.78 IT 3094778**

(43) Date of publication of application:
**25.06.80 Bulletin 80/13**

(45) Publication of the grant of the patent:
**22.06.83 Bulletin 83/25**

(84) Designated Contracting States:
**AT BE CH DE FR GB SE**

(56) References cited:
**BE - A - 717 790**
**CH - A - 573 877**
**DE - A - 2 402 642**
**DE - B - 2 712 651**
**FR - A - 2 391 174**
**FR - A - 2 391 346**
**US - A - 2 999 036**

(73) Proprietor: **ELETTROMECCANICA LUIGI BOVONE**
**Regione Pernigotti 24/A**
**I-15070 Belforte Monferrato Alessandria (IT)**

(72) Inventor: **ELETTROMECCANICA LUIGI BOVONE**
**Regione Pernigotti 24/A**
**I-15070 Belforte Monferrato Alessandria (IT)**

(74) Representative: **Giambrocono, Alfonso, Dott. Ing.**
**Via Rosolino Pilo 19/B**
**I-20129 Milano (IT)**

Courier Press, Leamington Spa, England

## Apparatus for automatically producing glazed insulating window or door panels

This invention relates to an apparatus for automatically producing glazed insulating window or door panels of the type constituted by a pair of equal glass panes mounted on the opposing sides of a metal section spacer frame to which said panes are joined by means of adhesive. The apparatus to which this invention refers is of the kind comprising a feeding device for horizontally feeding panes to a predetermined position, and a transfer device operated by pressurized fluid actuating means for substantially parallelly transferring a first pane from the predetermined position to an elevated position where the first pane is vertically aligned with a second pane fed to the predetermined position.

Apparatus of this kind are known in the art. FR—A—2391174 refers to said kind of apparatus. It depicts an apparatus having a pane feeding device in the form of an air cushion table for feeding substantially horizontally the panes in a predetermined position, and a transfer device in the form of a sucker device for substantially parallelly transferring a first pane to an elevated position in vertical alignment with a second pane successively reaching the predetermined position and onto which there has been manually directly applied the adhesivized spacing frame.

The most important deficiency affecting the known apparatus derives from the fact that the operator applies manually the spacing frame directly to a pane. Inaccuracies in properly positioning the frame, or inadvertent contacts between pane and frame, cause the pane to be soiled by the adhesive material coating the spacing frame, and to be discarded from the production line for cleaning before re-use. The operator is subjected to severe stress and therefore the resulting production rates are low.

FR—A—2391346 depicts an apparatus wherein a feeding device, formed by actuated and idle rollers, feeds substantially uprightly a first pane in a predetermined position on a transfer device formed by a movable trestle which substantially parallelly horizontally transfers the pane to a second position where the operator(s) manually applies the adhesive-coated spacing frame directly to said pane. Then a second pane is fed to the predetermined position, and is caused by gravity to contact the frame when a series of idle rollers, marginally guiding and supporting the second pane, are withdrawn from the latter. One of the deficiencies of this apparatus is that there are no guarantees that the second pane will adhere to the spacing frame along all of its margins, because the pane rotates along its lower margin when the marginally guiding and supporting idle rollers are withdrawn. To eliminate said imperfect adherence, the operator is obliged to intervene manually.

The above-listed deficiencies, resulting from the direct manual application of the spacing frame, are also inherent to the apparatus of FR—A—2,391,174.

CH—A—573,877 depicts an apparatus of a somewhat different kind, wherein a first pane is uprightly fed in a predetermined position, transferred to a second position where an adhesivized spacing frame is directly applied to the pane manually, a second pane is fed to a third position and transferred to a fourth position by a suction device, the first pane with the spacing frame thereon is returned to the first position and fed to the third position in alignment with the second pane, which is caused to contact the spacing frame by moving it from the fourth to the third position. To obtain the above rather complicated sequence of steps, there are necessarily required complicated and expensive mechanism and controls. Also, this known apparatus has the previously discussed drawbacks deriving from the manual direct application of the spacing frame to the pane.

The main object of the present invention is to provide an apparatus of the kind described avoiding the mentioned inconveniences and deficiencies of the prior art devices because the operator does not position manually the spacing frame directly on the pane.

The apparatus according to the invention is characterized by the fact that it further comprises a horizontally mobile table for receiving the spacing frame, provided with at least a partial coating of adhesive, and transferring the frame to a certain position below the first pane and vertically aligned therewith when the latter is in its elevated position, the arrangement being such that the pressurized fluid actuating means lowers the transfer device and the first pane carried thereby from the elevated position when the frame is situated in the certain position until the first pane contacts the frame to form an assembly therewith, and thereafter first raises and then lowers the assembly until the frame contacts the second pane which has been fed into the predetermined position to form the panel.

The invention will be more apparent from the detailed description of a preferred embodiment given hereinafter by way of non-limiting example with reference to the accompanying drawing, in which:

Figure 1 is a diagrammatic plan view of the apparatus;

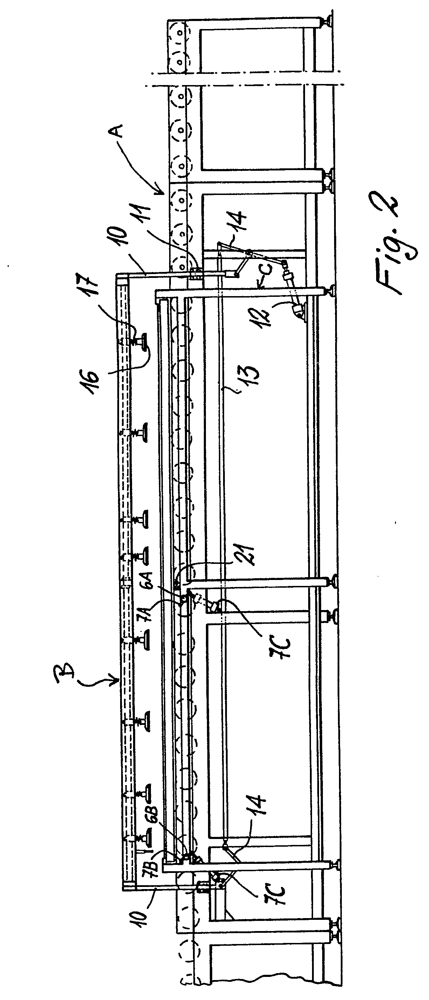

Figure 2 is a side view;

Figure 3 is a more diagrammatic plan view of the machine, the purpose of this view being only to illustrate the position of the sensors which control the operational stages of the apparatus; and

Figure 4 is a diagrammatic detailed view of the spacer frame disposed on a transfer table during the application of the overlying pane.

With reference to the figures, the glass panes K originating from a normal washing-degreasing and drying station reach the apparatus according to the invention by way of a roller conveyor. As the station or roller conveyor do not form part of the invention, they are neither shown nor described.

The apparatus according to the invention can be divided ideally into three sections:

1) a roller table for accelerating and positioning the glass panes;

2) a transfer sucker device B for assembling the panes on their spacer frame;

3) a table C for positioning and transferring the frames.

The roller table A comprises a series of parallel shafts 1 inclined at about 1° to the normal to the main axis D of the apparatus, in order to urge the glass panes towards a lateral datum 4, and rotated by a motor drive, not shown, but constituted for example by an electric motor with reduction gear and a pinion and chain connection. The rollers 2, constructed for example of aluminium, are mounted on the shafts 1 in a staggered arrangement, and each roller tapers towards the outer edge where it terminates in a plastics ring. To obtain spacing between the panes which arrive in the direction of the arrow E, the part A1 of the roller table can reach a speed higher than the speed of the tables which precede it and which are not shown. The section A1 therefore serves for positioning and spacing the panes. Both the section A1 and the next section A2 of the roller table comprise, along that side of the table towards which the inclination of the shafts 1 tends to urge the panes K, a belt 3 which operates in a vertical position and rests at its rear, along its entire working portion, on a fixed stop wall 4. The belt passes over two pulleys 5 positioned at its ends, at least one of which is driven synchronously with the shafts 1 by any known means. It acts as a lateral stop for positioning the panes.

Transverse shafts 6A, 6B provided with radial projections 7A, 7B, are disposed at suitable distances apart in the section A2. These shafts can be rotated by pneumatic jacks 7C in such a manner as to assume two positions, namely one in which the projections 7A, 7B interfere with the feed path of the pane K, and the other in which this interference does not occur. These shafts, or rather their radial projections, act as frontal stops for positioning the panes.

Pushers are suitably disposed in the section A2 to urge the pane towards the belts 3, and thus towards the wall 4 by way of the belt itself. These pushers are constituted by pneumatic cylinders 8A, 8B positioned horizontally below the plane of movement of the glass panes, and acting on the edge of the panes by way of idle rollers 9A, 9B. The idle rollers are disposed at the same level as the plane of the panes such that these latter can be pressed against the belt 3 when, during the assembly operations, the rollers 9A, 9B are moved in the direction of the arrow F.

In the section A2 above the roller table, there is disposed the sucker device B, which can be moved towards or away from the roller table A. This device comprises a rectangular frame 50 constructed of metal sections and comprising a series of longitudinal and cross members. The longitudinal members 15 carry a series of suckers 16 which are slidable against a spring 17 and can be connected alternatively to atmosphere and to a suction source. At its four corners, the frame 50 carries a shaft 10 guided vertically in bushes 11 carried by the table. A pneumatic jack 12 acts by way of rods and levers 13, 14 on these shafts in order to cause them to move vertically.

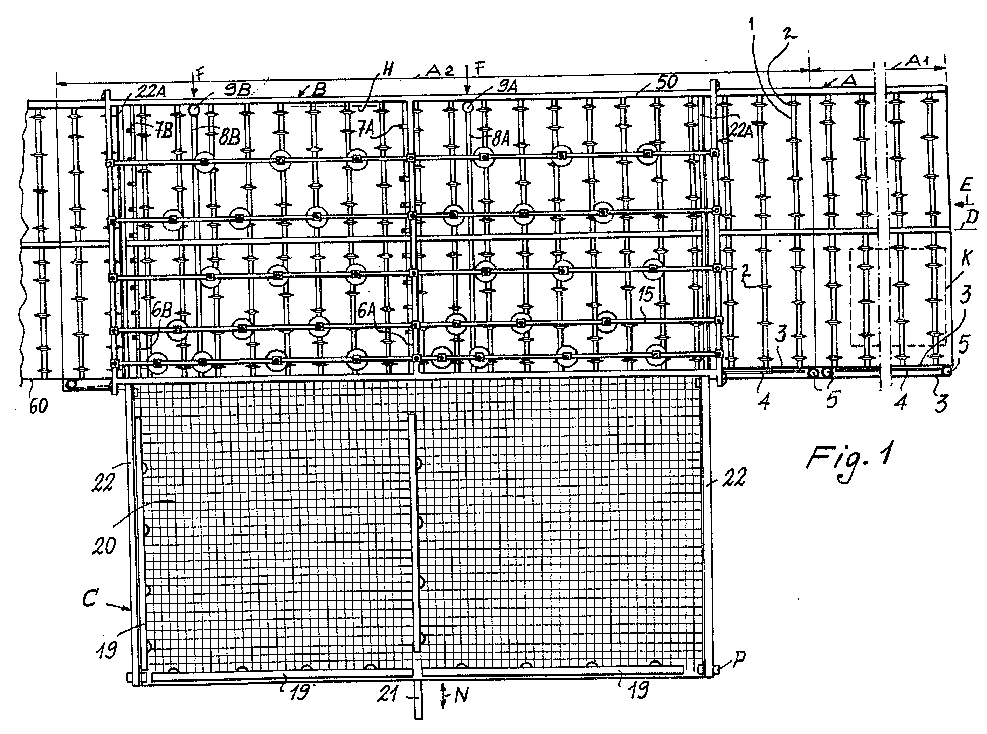

On one side of the roller table A is disposed the mobile table C for positioning and transferring the frames Z. It comprises a horizontal rectangular plate 51 mounted on a supporting frame 52. The frame is supported in lateral guides 22 by idle rollers 53. These lateral guides extend transversely to the roller table A, as shown at 22A in Figure 1. The lower face 52A of the frame 52 remains above the plane of movement of the panes K so as not to interfere with those panes which are on the roller table. The frame 52 and thus the plate 51 fixed to it are driven in the direction of the arrow N by a rodless long-stroke pneumatic cylinder 21 manufactured by Messrs. Origa International AB, Kungsor, Sweden. In order to facilitate the correct positioning of the spacer frame Z on the plate 51, this latter is provided with a series of stops 19 and a graduated squared surface 20.

By its movement, the frame 52 is brought below the sucker device B, the spacer frame Z being located in accordance with the same positioning references as the glass panes.

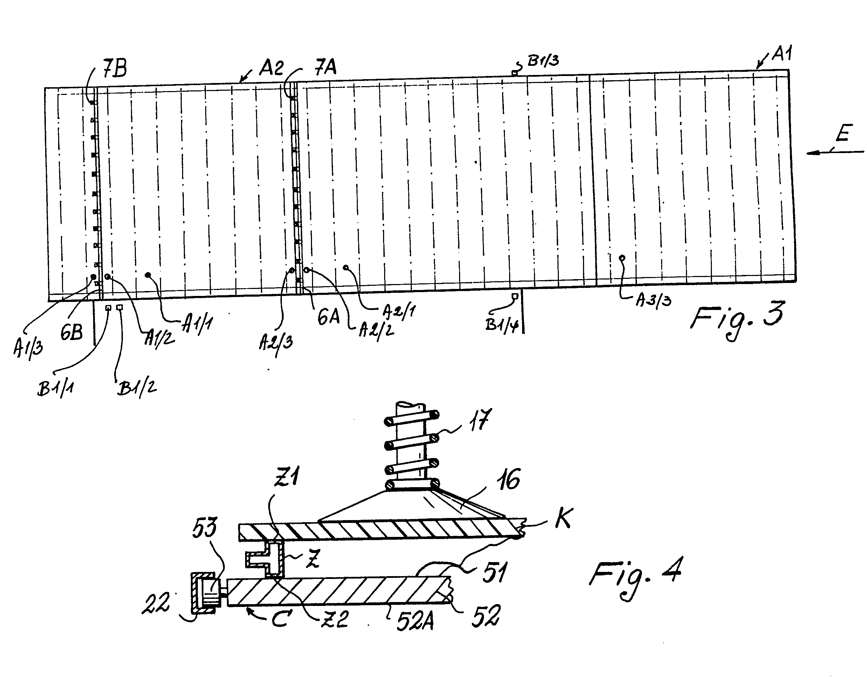

The structure of the roller table A supports in suitable position a series of presence sensors or microswitches, the arrangement of which is shown in Figure 3 in which they are indicated by A1/1, A1/2, A1/3, A2/3, A2/2, A2/1, A3/3, and the structure of the sucker device B carries the presence sensors or microswitches B1/1, B1/2, B1/3, B1/4.

The operation is as follows:

The pane K, arriving from the direction E, is spaced apart from the next pane by virtue of the greater speed of the drive rollers 2 of the section A1, and passes through the section A2 to approach the lateral datum positions (i.e. the belts 3 and walls 4) because of the inclined arrangement of the rollers 2.

When the pane K engages the presence sensor A1/1, the front stops 7B on the shaft 6B situated on the left hand side of the table are raised, and the left hand transverse pusher 8B—9B is moved so as to laterally retain the pane during the assembly operations.

The pane K continues to move forward until its front edge touches the stops 7B of the shaft 6B. under such conditions it is positioned along perpendicular datum lines. In this position, the pane acts on the sensor A1/2, which causes both the pane feed to stop, and the sucker device B carrying the suckers to descend.

When the suckers 16 come into contact with the first pane, the descent of the device B is halted automatically by virtue of the presence sensor B1/1 carried by said device, and the suckers 16 becomes connected to the suction source. The device B is then raised, carrying with it the first pane, and stops in this position. In the meantime, the operator situated in front of the table C carefully rests a spacer frame Z on the plate 51, precisely in a position such that when the plate has reached its end-of-stroke position H under the action of the cylinder 21, it is located exactly below the first pane K. In order for the frame Z to remain adhering to the plate 51 in its predetermined position, its two opposing faces Z1 and Z2 will have been at least partly coated previously with a layer of butyl-based adhesive which has a much lower degree of adherence to the plate 51 than to the glass. The plate 51 comprises a tetrafluoroethylene-based coating on to which a silicone film is occasionally sprayed.

The operator operates the activation pushbutton P and the cylinder 21 moves the table C in the direction N. This positions the metal frame Z under the sucker device B. When it reaches its end of stroke, the plate 51, 52 activates the sensor B1/3 which causes the sucker device B to again descend in order to pick up the frame from the plate 51, 52 (see figure 4). When the pane K has been applied to the frame Z, the sensor B1/2 operates such that the hydraulic device B rises again to raise both the pane K and the frame Z, because of the difference in adhesion between the glass and frame and between the frame and plate 51, and the plate 51, 52 returns to its initial position where it stops.

During the positioning of the frame Z, the second pane becomes positioned in a manner analogous to the first by the action of the same sensors on which the first pane operated.

The hydraulic device B descends, again operated by the sensor A1/2, and, by the operation of the sensor B1/1, deposits the assembly (formed by the first pane K and the frame Z attached to its front face) on to the second pane to thus form the unit, i.e. the glazed panel, and rises again to its initial position.

The frontal stops 7B of the shafts 6B are also lowered, and the surface rollers are again driven. The unit thus formed passes along a roller table 60 and reaches a calender, not shown. The calender presses the unit and causes the frame Z to adhere closely to the panes by way of the usual butyl layer which had been distributed over the two sides of the frame before it was placed on the plate 50, 51.

The aforegoing description relates to the use of the apparatus for producing one glazed panel for each operational cycle. However, the apparatus can also produce two glazed panels per cycle. For this purpose, the shaft 6A with the projections 7A and the pusher 9A are provided, together with the sensors A1/1, A2/2, and A2/3 associated therewith, which did not operate in producing only one glazed panel per cycle. In this case, the first and second pane are positioned and then raised by the sucker device B, two frames Z are placed on the frame support table C, and the third and fourth pane form the lower side of the two units. In order to carry out this type of operation, the dimensions of the glass panes must not exceed the centre line of the frame support table C in the length direction.

## Claims

1. An apparatus for producing glazed insulated window or door panels having two glass panes adhesively secured to an intermediate spacing frame (Z), comprising a feeding device (A) for horizontally feeding panes to a predetermined position and a transfer device (B) operated by pressurized-fluid actuating means (12, 13, 14) for substantially parallely transferring a first pane (K) from the predetermined position to an elevated position, where the first pane is vertically aligned with a second pane fed to the predetermined position, characterized in that it further comprises a horizontally mobile table (C) for receiving the spacing frame (Z), provided with at least a partial coating of adhesive (Z1, Z2), and transferring the frame to a certain position below the first pane (K) and vertically aligned therewith when the latter is in its elevated position, the arrangement being such that the pressurized-fluid actuating means (12, 13, 14) lowers the transfer device (B) and the first pane (K) carried thereby from the elevated position when the frame (Z) is situated in said certain position until the first pane (K) contacts the frame (Z) to form an assembly therewith, and thereafter first raises and then lowers the assembly until the frame (Z) contacts the second pane which has been fed into the predetermined position to form the panel.

2. An apparatus according to claim 1, characterized in that, in order to place correctly the frame (Z) on the horizontally mobile table (C), the latter comprises locating means, preferably in the form of a graduated squared surface (20) and a series of stops (19).

3. An apparatus according to one or more of the preceding claims, characterized in that the horizontally mobile table (C) comprises a tetrafluoroethylene and silicone coating.

4. An apparatus according to one or more of the preceding claims, characterized in that the feeding device (A) comprises a roller table associated with controlled stop means (6A, 7A; 6B, 7B) insertable into the path of the panes (K), and with controlled thrust means (8A, 9A; 8B, 9B) for displacing the panes (K).

5. An apparatus according to claim 4, characterized in that the rollers (2) of the roller table (A) are mounted on shafts (1), the axis of which are inclined to one side of the roller table (A).

6. An apparatus according to claim 5, characterized in that the rollers (2) are disposed staggered on the shafts (1).

7. An apparatus according to one or more of the preceding claims, characterized in that the transfer device (B) is in the already known form of a sucker device.

8. An apparatus according to one or more of the preceding claims, wherein the roller table (A) is associated with at least one driven belt (3), the inner portion of which slides along a stationary surface (4) which forms a lateral stop wall.

**Revendications**

1. Appareil pour la fabrication de panneaux de fenêtres ou portes vitrées isolantes, comportant deux plaques de verre ou vitres fixées par collage à un cadre (Z) d'espacement intermédiaire, qui comprend un dispositif d'alimentation (A), pour distribuer, horizontalement des vitres à une position prédéterminée, et un dispositif de transfert (B) actionné par des moyens de manoeuvre à fluide sous pression, pour transférer sensiblement parallèlement une première vitre (K) de la position prédéterminée à une position haute, dans laquelle la première vitre est alignée verticalement avec une deuxième vitre distribuée à la position prédéterminée, l'appareil étant caractérisé en ce qu'il comprend une table (C), mobile horizontalement, pour recevoir le cadre d'espacement (Z) muni d'au moins un revêtement partiel de produit adhésif (Z1, Z2), et transférer le cadre à une certaine position au-dessous de la première vitre (K) en alignement vertical avec elle lorsque cette dernière est dans sa position haute, l'agencement étant tel que les moyens de commande (12, 13, 14) à fluide sous pression abaissent le dispositif de transfert (B) et la première vitre (K) portée par celui-ci, à partir de la position haute, lorsque le cadre (Z) est situé dans ladite certaine position, jusqu'à ce que la première vitre (K) soit en contact avec le cadre (Z) pour former un assemblage avec celui-ci, puis soulèvent d'abord et abaissent ensuite l'assemblage jusqu'à ce que le cadre (Z) vienne en contact avec la deuxième vitre qui a été amenée dans la position prédéterminée, afin de constituer le panneau.

2. Appareil suivant la revendication 1, caractérisé en ce que, afin de placer correctement le cadre (Z) sur la table (C) mobile horizontalement, celle-ci comprend des moyens de localisation, de préférence sous la forme d'une surface quadrillée, graduée (20), et d'une série de butées (19).

3. Appareil suivant l'une des revendications 1 ou 2, caractérisé en ce que la table (C) mobile horizontalement comprend un revêtement de tétrafluoroéthylène et de silicone.

4. Appareil suivant une ou plusieurs des revendications précédentes, caractérisé en ce que le dispositif d'alimentation (A) comprend une table à rouleaux associée à des moyens de butée réglables (6A, 7A, 6B, 7B), qui peuvent être insérés dans le passage des vitres (K), et à des moyens de poussée (—A, 9A, 8B, 9B) pour déplacer les vitres (K).

5. Appareil suivant la revendication 4, caractérisé en ce que les rouleaux (2) de la table à rouleaux sont montés sur des arbres (1) dont les axes sont inclinés vers un côté de la table (A).

6. Appareil suivant la revendication 5, caractérisé en ce que les rouleaux (2) sont disposés en quinconce sur les arbres (1).

7. Appareil suivant une ou plusieurs des revendications précédentes, caractérisé en ce que le dispositif de transfert (B) est sous la forme connue d'une dispositif à aspiration.

8. Appareil suivant une ou plusieurs des revendications précédentes, caractérisé en ce que la table à rouleaux (A) est associée à au moins une courroie entraînée (3) dont la partie intérieure glisse le long d'une surface fixe (4) qui constitue une paroi d'arrêt latérale.

**Patentansprüche**

1. Vorrichtung zur Herstellung von isolierverglasten Fensteroder Türtafeln mit zwei Glasscheiben, die mit einem Zwischenrahmen (Z) verklebt sind, wobei eine Zuführvorrichtung (A) zur horizontalen Zuführung von Scheiben in eine vorbestimmte Stellung vorgesehen und eine Überführvorrichtung (B) angeordnet ist, die mittels über ein Druckmedium wirkender Betätigungsorgane (12, 13, 14) eine erste Scheibe (K) von der vorbestimmten Stellung im wesentlichen parallel in eine gehobene Stellung überführt, wo sich die erste Scheibe vertikal fluchtend mit einer in die vorbestimmte Stellung zugeführten zweiten Scheibe befindet, dadurch gekennzeichnet, daß ein horizontal bewegbarer Tisch (C) zur Aufnahme des Zwischenrahmens (Z) vorgesehen ist, der wenigstens teilweise mit einer Haftschicht (Z1, Z2) versehen ist, wobei der Zwischenrahmen (Z) vom Tisch in eine bestimmte fluchtende Stellung unterhalb der sich in der gehobenen Stellung befindlichen ersten Scheibe (K) gebracht wird und die Anordnung derart ist, daß die Betatigungsorgane (12, 13, 14) die Uberführvorrichtung (B) mit der von ihr getragenen ersten Scheibe (K) von der gehobenen Stellung absenken, wenn der Zwischenrahmen (Z) in der genannten bestimmten Stellung ist und bis die erste Scheibe (K) den Zwischenrahmen (Z) berührt um eine Einheit mit diesem zu bilden, worauf diese Einheit vorerst gehoben und dann abgesenkt wird, bis der Zwischenrahmen (Z) die in die vorbestimmte Stellung zugeführte zweite Scheibe berührt, wodurch die Tafel hergestellt wird.

2. Vorrichtung nach Anspruch 1, dadurch gekennzeichnet, daß zur genauen Placierung des Zwischenrahmens (Z) am horizontal bewegbaren Tisch (C) Festlegungsorgane, vorzugsweise in Form einer mit einer Maßeinteilung versehenen Fläche (20) und einer Reihe von Anschlägen (19) vorgesehen sind.

3. Vorrichtung nach einem oder mehreren der vorstehenden Ansprüche, dadurch gekennzeichnet, daß der horizontal bewegbare Tisch (C) eine Beschichtung mit Tetrafluoräthylen und Silikon aufweist.

4. Vorrichtung nach einem oder mehreren der vorstehenden Ansprüche, dadurch gekennzeichnet, daß die Zuführvorrichtung (A) einen Rollentisch aufweist, dem in den Weg der Scheiben (K) einsetzbare gesteuerte Halteorgane (6A, 7A; 6B, 7B) und gesteuerte Schiebeorgane (8A, 9A; 8B, 9B) zum Versetzen der Scheiben (k) zugeordnet sind.

5. Vorrichtung nach Anspruch 4, daß die Rollen (2) am Rollentisch (A) an Wellen angebracht sind, deren Achse nach einer Seite des Rollentisches (A) geneigt sind.

6. Vorrichtung nach Anspruch 5, dadurch gekennzeichnet, daß die Rollen (2) versetzt an den Wellen (1) angeordnet sind.

7. Vorrichtung nach einem oder mehreren der vorstehenden Ansprüche, dadurch gekennzeichnet, daß die Überführvorrichtung (B) in an sich bekannter Weise als Saugvorrichtung ausgebildet ist.

8. Vorrichtung nach einem oder mehreren der vorstehenden Ansprüche, dadurch gekennzeichnet, daß dem Rollentisch (A) mindestens ein angetriebener Riemen (3) zugeordnet ist, dessen innerer Teil entlang einer stationaren Fläche (4) gleitet, die eine seitliche Haltewand bildet.

Fig. 1

Fig. 2

Fig. 3

Fig. 4

0012462